(19) Europäisches Patentamt
European Patent Office
Office européen des brevets

(11) **EP 1 784 625 B1**

(12) **EUROPEAN PATENT SPECIFICATION**

(45) Date of publication and mention
of the grant of the patent:
**18.11.2009 Bulletin 2009/47**

(51) Int Cl.:
*G01J 3/36* *(2006.01)*     *G01J 3/04* *(2006.01)*

(21) Application number: **05784506.7**

(22) Date of filing: **29.07.2005**

(86) International application number:
**PCT/IB2005/052558**

(87) International publication number:
**WO 2006/021903 (02.03.2006 Gazette 2006/09)**

(54) **AUTONOMOUS CALIBRATION FOR OPTICAL ANALYSIS SYSTEM**

AUTONOME KALIBRIERUNG FÜR OPTISCHE ANALYSESYSTEME

PROCEDE D'ETALONNAGE AUTONOME POUR SYSTEME D'ANALYSE OPTIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.08.2004 EP 04104085**

(43) Date of publication of application:
**16.05.2007 Bulletin 2007/20**

(73) Proprietor: **Koninklijke Philips Electronics N.V.**
**5621 BA Eindhoven (NL)**

(72) Inventors:
• **SCHUURMANS, Franck J.P.,**
**Société Civile SPID**
**F-75008 PARIS (FR)**
• **VAN BEEK, Michael Cornelis,**
**Société Civile SPID**
**F-75008 PARIS (FR)**
• **VAN DER VOORT, Marjolein,**
**Société Civile SPID**
**F-75008 PARIS (FR)**

(74) Representative: **Schouten, Marcus Maria**
**Philips**
**Intellectual Property & Standards**
**P.O. Box 220**
**5600 AE Eindhoven (NL)**

(56) References cited:
WO-A-03/058183     JP-A- 61 266 925
US-A- 4 652 761     US-A- 5 504 575

**Description**

The present invention relates to the field of optical spectroscopy.

Spectroscopic techniques are widely used for determination of the composition of a substance. By spectrally analyzing an optical signal, i.e. a spectroscopic optical signal, the concentration of a particular compound of the substance can be precisely determined. The concentration of a particular substance is typically given by an amplitude of a principal component of an optical signal.

In the prior art optical analysis system for determining an amplitude of a principal component of an optical signal are well known. The known optical analysis systems are typically part of a spectroscopic analysis system suited for, e.g., analyzing which compounds are comprised at which concentrations in a sample. It is well known that light interacting with the sample carries away information about the compounds and their concentrations. The underlying physical processes are exploited in optical spectroscopic techniques in which light of a light source such as, e.g., a laser, a lamp or light emitting diode is directed to the sample for generating an optical signal which carries this information.

JP 61 266925 A discloses a double luminous flux measurement system using photoelectric converting element array. The luminous flux emitted by a light source is passed through a lens to irradiate a sample and a reference body set on a measurement cell, thereby obtaining the sample luminous flux A and reference luminous flux B. A spectrograph is irradiated with those two pieces of luminous flux A and B, which are separated spectrally to illuminate an optical mask. This optical mask is provided with a sample light irradiated area SBA and a reference light irradiated area CBA which have light shield parts and light transmission parts. The photoelectric converting element array is irradiated with the pieces of luminous flux separated spatially by the optical mask.

US 5,504,575 A discloses a SLM (spatial light modulator) spectrometer that employs an entrance slit or a collimator to provide parallel rays of radiation to a prism which disperses the instant radiation into an associated wavelength spectrum. The resulting spectrum from the prism is instant upon a SLM, such as a deformable mirror device (DMD). By selectively activating or deactivating a small portion of the surface of the SLM, it is possible to selectively reflect or transmit a portion of the spectrum incident upon the SLM onto a focusing device, such as a parabolic focusing mirror. The focusing device in turn focuses the portion of the spectrum reflected by the selected cells on the SLM to a sensor. The wavelength selected is a function of which row of cells are activated or deactivated in the SLM.

US 4,652,761 A discloses a spectral photometer for detecting ozone and sulphur dioxide in the atmosphere which provides automatic calibration and which provides automatic linearity correction for a photo multiplier tube used within the spectral photometer. Automatic calibration is provided by using a computer to control a stepper motor to move a grating in the spectral photometer so that the photo multiplier tube receives maximum intensity at the calibration wavelengths derived from a mercury source. Automatic linearity correction is obtained by cycling a wavelength selection mask across exit slits located in the focal plane of the device and first combines separately taken counts of two different wavelengths and comparing this sum with the sum of counts of these wavelengths taken simultaneously.

WO 03/058183 A1 discloses a method and apparatus for optical spectral power monitoring using a time-division-multiplexed detection scheme. The apparatus uses a wavelength-dispersing means such as a direction grating to separate an optical signal into multiple spectral channels, and an array of beam-manipulating elements positioned to correspond with the spectral channels. The beam-manipulating elements are individually controllable so as to direct the spectral channels into an optical detector in a time-division-multiplexed sequence. The apparatus may further employ a polarization diversity scheme for polarization-insensitive operation. This enhances the spectral resolution of the apparatus while providing improved accuracy in spectral power detection.

For example, light may be absorbed by the sample. Alternatively or in addition, light of a known wavelength may interact with the sample and thereby generate light at a different wavelength due to, e.g. a Raman process. The transmitted and/or generated light then constitutes the optical signal, which may also be referred to as the spectrum. The relative intensity of the optical signal as function of the wavelength is then indicative for the compounds comprised in the sample and their concentrations.

To identify the compounds comprised in the sample and to determine their concentrations the optical signal has to be analyzed. In the known optical analysis system the optical signal is analyzed by dedicated hardware comprising an optical filter. This optical filter has a transmission which depends on the wavelength, i.e. it is designed to weight the optical signal by a spectral weighting function which is given by the wavelength dependent transmission. The spectral weighting function is chosen such that the total intensity of the weighted optical signal, i.e. of the light transmitted by the filter, is directly proportional to the concentration of a particular compound. Such an optical filter is also denoted as multivariate optical element (MOE). This intensity can then be conveniently detected by a detector such as, e.g., a photodiode. For every compound a dedicated optical filter with a characteristic spectral weighting function is used. The optical filter may be, e.g., an interference filter having a transmission constituting the desired weighting function.

For a successful implementation of this analysis scheme it is essential to know the spectral weighting functions. They may be obtained, e.g., by performing a principal component analysis of a set comprising N spectra of N pure compounds of known concentration where N is an integer. Each spectrum comprises the intensity of the corresponding optical signal at M different wavelengths where M is an integer as well. Typically, M is much larger than N. Each spectrum containing M intensities at corresponding M wavelengths constitutes an M dimensional vector whose M components are these intensities. These vectors are subjected to a linear-algebraic process known as singular value decomposition (SVD) which is at the heart of principal component analysis and which is well understood in this art.

As a result of the SVD a set of N eigenvectors $z_n$ with n being a positive integer smaller than N+1 is obtained. The eigenvectors $z_n$ are linear combinations of the original N spectra and often referred to as principal components or principal component vectors. Typically, the principal components are mutually orthogonal and determined as normalized vectors with $|z_n|=1$. Using the principal components $z_n$, the optical signal of a sample comprising the compounds of unknown concentration may be described by the combination of the normalized principal components multiplied by the appropriate scalar multipliers:

$$x_1z_1+x_2z_2+\ldots+x_nz_n,$$

The scalar multipliers $x_n$ with n being a positive integer smaller than N+1 may be considered the amplitudes of the principal components $z_n$ in a given optical signal. Each multiplier $x_n$ can be determined by treating the optical signal as a vector in the M dimensional wavelength space and calculating the direct product of this vector with a principal component vector $z_n$.

The result yields the amplitude $x_n$ of the optical signal in the direction of the normalized eigenvector $z_n$. The amplitudes $x_n$ correspond to the concentrations of the N compounds.

In known optical analysis systems the calculation of the direct product between the vector representing the optical signal and the eigenvector representing the principal component is implemented in the hardware of the optical analysis system by means of the optical filter. The optical filter has a transmittance such that it weighs the optical signal according to the components of the eigenvector representing the principal component, i.e. the principal component vector constitutes the spectral weighting function. The filtered optical signal can be detected by a detector which generates a signal with an amplitude proportional to the amplitude of the principal component and thus to the concentration of the corresponding compound.

Especially, when the optical analysis system is dedicated to determine the concentration of a single compound of a substance, like e.g. glucose concentration in blood, it is advantageous to make use of a corresponding optical filter, that is designed for the spectral weighting function of this particular compound. Such dedicated optical filters can be realized in a cost efficient way because they do not have to provide reconfigurable transmission or absorption properties. Optical analysis systems dedicated for determination of the concentration of a particular compound may therefore be implemented on the basis of a low-cost MOE, that can be implemented on the basis of a dispersive optical element, such as a prism or a grating and a corresponding optical filter providing a spatial transmission pattern.

Here, an optical signal received from a sample carrying spectral components being indicative of the composition of the sample is incident on the dispersive optical element. By means of the dispersive optical element, the incoming optical signal is spatially decomposed into various spectral components. Hence, the dispersive optical element serves to spatially separate the spectral components of the incident optical signal. Preferably, the evolving spectrum spreads along a direction specified by the dispersive optical element. For example, the spectrum might spread along a first direction, e.g. horizontally.

Making use of a dedicated spatial transmission mask inserted into the optical path of the spectrum, dedicated spectral components of the evolving spectrum can be attenuated or even entirely blocked. Therefore, the spatial transmission mask has to provide a plurality of areas featuring different transmission properties. When the spectrum is spread in a horizontal direction, these areas of the spatial transmission mask have to be aligned horizontally, thereby providing a uniform transmission in the vertical direction.

Additionally, by uniformly expanding the spectrum in a vertical direction, the spatial transmission mask might be divided in two, or more, sections being aligned in a vertical direction. Each section may then feature different spatial transmission patterns allowing to simultaneously manipulate the spectrum in two, or more, different ways.

Consequently, when vertically divided in two sections, the upper section of the spatial transmission mask may effectively serve as a first spectral weighting function whereas the lower section of the spatial transmission mask may provide a second spectral weighting function. By separately detecting these two differently manipulated spectra, positive and negative parts of a principal component can be separately detected, thus allowing for an effective and sufficient amount of information in order to determine an amplitude corresponding to the concentration of the dedicated compound. For example, by mutually subtracting positive and negative part of the spectral weighting function, a signal being indicative of the compounds' concentration might be precisely derived.

Usage of dedicated spatial transmission masks in combination with dispersive optical elements effectively provides a low-cost implementation of an optical analysis system. However, because the spectral components of the received optical signal are spatially spread, the spatial transmission mask has to be properly aligned in order to provide accurate spectral attenuation of dedicated spectral components of the optical signal. The relative positioning of an evolving spectrum and the spatial transmission mask is rather critical and a slight displacement of either the spectrum or the transmission mask may seriously affect the result of the optical analysis. Therefore, an accurate and reliable calibration mechanism is required for spectroscopic analysis that is based on multivariate optical analysis of an optical signal.

The present invention aims to provide calibration of an optical analysis system without implementation of a light source that is dedicated for calibration. In contrast the invention aims to provide calibration on the basis of a spectroscopic optical signal.

The present invention provides a spectroscopic system for determining a principal component of an optical signal comprising return radiation from a volume of interest. The spectroscopic system comprises the features of claim 1.

The dispersive optical element in combination with the spatial light manipulation means represent a multivariate optical element (MOE). Typically, the spatial light manipulation means comprise a spatial transmission pattern for selectively blocking or attenuating various spectral components of the optical signal. In this way a spectral weighting function can be effectively realized that in turn allows to determine the concentration of a dedicated compound inside the volume of interest. The position of the spatial light manipulation means with respect to a dispersed spectrum of the optical signal provided by the dispersive optical element is rather critical and has a severe impact on the spectral filtering provided by the MOE.

Additionally, not only the relative position of a spatially dispersed spectrum and a spatial transmission mask but also the light emission characteristics of the light source that may depend on temperature may have a critical impact on the calibration of the optical analysis system.

The reference segment of the spatial light manipulation means serves as an effective means for calibrating the optical analysis system. Preferably, a calibration is performed on the basis of radiation that is transmitted through the reference segment of the spatial light manipulation means and that is detected by means of the at least first detector. In particular, the magnitude of the light intensity being detected by means of the at least first detector gives a sufficient indication whether the spectroscopic system is accurately calibrated. In case that the magnitude of detected light intensity indicates an inaccurate calibration, the control unit serves to calibrate the spectroscopic system in a plurality of different ways until the light intensity that is transmitted through the reference segment of the spatial light manipulation means indicates accurate calibration, i.e. accurate alignment of the optical paths of the optical analysis system.

According to a preferred embodiment of the invention, the reference segment comprises a slit aperture and the first position substantially corresponds to the wavelength of the excitation radiation. Hence, the reference segment is implemented as a slit aperture at a position on the spatial light manipulation means that corresponds to the wavelength of the excitation radiation. In this way the excitation radiation serves as a reference for calibration of the optical analysis system. Typically, the excitation radiation features a narrow spectral band that is suitable to induce various scattering processes when focused into the volume of interest. For example, the wavelength of the excitation radiation may be in the infrared (IR) or in the near infrared (NIR) spectral range. When focused into the volume of interest, numerous scattering processes either of elastic or inelastic type may occur.

The return radiation emanating from the volume of interest may therefore comprise inelastically as well as elastically scattered components. For example, back-scattered inelastic components of the return radiation may have been subject to Raman scattering processes whereas elastically scattered components of the return radiation may stem from Rayleigh scattering leaving the wavelength of the back-scattered components substantially unaffected with respect to the incident excitation radiation. In typical spectroscopic scenarios only a minor portion of the return radiation has become subject to an inelastic scattering process, such like a Stokes or Anti-Stokes scattering process. Therefore, only a minor portion of the return radiation is frequency shifted with respect to the excitation radiation. The spectrum of the return radiation therefore inevitably features a peak at the wavelength of the excitation radiation.

The invention effectively exploits the existence of the excitation radiation's peak in the spectrum of the return radiation. The inherent existence of this excitation peak therefore effectively provides a reference line in the spectrum.

By detecting an intensity of light being transmitted through the reference segment of the spatial light manipulation means and comparing the detected light intensity with a corresponding intensity that has been detected for an accurately calibrated optical analysis system, reliable information about accurate or inaccurate calibration of the optical analysis system can be obtained. Alternatively, when a reference intensity value of an accurately calibrated spectroscopic system is not available, the control unit may calibrate the spectroscopic system in a plurality of different ways until the light intensity that is transmitted through the reference segment of the spatial light manipulation means reaches, for instance, a maximum value.

In this way the excitation radiation that is inherently present in the spectrum of the optical signal can be effectively exploited for calibration of the optical analysis system. Hence, no external or no additional calibration light source has to be implemented into the optical analysis system. By effectively replacing such a calibration light source by means of the excitation radiation, a potential misalignment of a calibration light source leading to a dramatic falsification of the results of the spectroscopic system is intrinsically prevented.

According to a further preferred embodiment of the invention, the control unit is adapted to translate the spatial light manipulation means along the first direction. In this way a misalignment of the spatial light manipulation means that may be either implemented as a fixed spatial light transmission pattern or a reconfigurable spatial light modulator (SLM), can be effectively compensated. Preferably, the spatial light manipulation means are mounted on a servo driven translation stage that can be controlled by means of the control unit.

According to a further preferred embodiment of the invention, the control unit is adapted to control the light source in order to modify the wavelength of the excitation radiation. In this way the control unit may tune the wavelength of the light source that generates the excitation radiation. Typically, this light source is implemented as a laser light source emitting in the NIR range. Due to varying external conditions, e.g. varying temperature, the wavelength of the emitted excitation radiation might become subject to a remarkable drift or offset. This may have dramatic consequences for the scattering processes induced by the excitation radiation inside the volume of interest. In such a case, the spectrum of the return radiation might be shifted correspondingly and/or the efficiency of the spectroscopic process may decrease.

Additionally, the intensity being transmitted through the reference segment of the spatial light manipulation means may no longer correspond to the expected maximum intensity that can be measured when the spectroscopic system is correctly calibrated. Hence, in response to a detection of a decrease of intensity being transmitted through the reference segment, the control unit may stepwise modify the calibration of a laser light source in order to compensate, for instance, a temperature based offset of the excitation light source.

According to a further preferred embodiment of the invention, the control unit is further adapted to rotate or to translate the dispersive optical element. In this way a position mismatch of the spectrum evolving from the dispersive optical element and the spatial light manipulation means can be compensated. Preferably, the dispersive optical element is mechanically coupled to a rotation and/or translation stage that can be electrically controlled by means of the control unit.

According to a further preferred embodiment of the invention, the spatial light manipulation means are implemented as modifiable spatial light manipulation means. In this embodiment the control unit is further adapted to modify the spatial light manipulation means, i.e. to modify the spatial light transmission pattern of the spatial light manipulation means. For example the spatial light manipulation means can be implemented on the basis of a liquid crystal (LC-cell) in combination with an arrangement of crossed polarizers.

The LC-cell is preferably electrically controllable and provides manipulation of the spatially dispersed spectrum. In this embodiment calibration of the spectroscopic system can be realized by a modification of the spatial light manipulation means. Instead of shifting the spatial light manipulation means itself, here, the spatial light transmission pattern of the spatial light modulator can be shifted along the first direction, i.e. in the direction of the spatial separation of the spectral components of the return radiation by keeping the position of the spatial light modulator constant. Implementing the spatial light manipulation means as spatial light modulator also requires realizing the reference segment in a reconfigurable way. Hence, reconfiguration of the spatial light modulator equally refers to reconfiguration of the spatial light transmission mask as well as to a modification of the position of the reference segment.

Consequently, the spectroscopic system can be calibrated by means of the control unit in a plurality of different ways, either by translating the spatial light manipulation means, by modifying or reconfiguring the spatial light manipulation means, by rotating or translating the dispersive optical element or by calibrating or tuning the light source that generates the excitation radiation. Calibration of the spectroscopic system may be performed on the basis of a single one or on the basis of several ones of the above described calibration techniques. For example, calibration of the spectroscopic system can be performed by tuning the laser light source in combination with a translation of the spatial light manipulation means. The various calibration techniques may either be performed simultaneously or sequentially or in any other arbitrary order.

According to a further preferred embodiment of the invention, the at least first detector further comprises a segmented detector that has at least two separate detector segments that are separated along the first direction. like e.g. a split detector. In this way a misalignment of the spatial light manipulation means can be directly classified. Whenever a detector segment detects a transmitted intensity that is larger than the intensity detected by the other detector segment, this gives a clear indication that the spatial light manipulation means are improperly positioned within the optical analysis system. Depending on the arrangement of the two detector segments, also the direction of the spatial light manipulation means' misplacement can be determined. This allows for a faster calibration of the optical analysis system.

According to a further preferred embodiment of the invention, the at least first detector is directly integrated into the spatial light manipulation means at the first position. The at least first detector is either rigidly attached behind the slit aperture of the spatial light manipulation means or when available in an appropriate size, the detector itself may represent the slit aperture. In both cases no further optical components are required to transmit or to focus the light that has been transmitted through the reference segment onto the at least first detector.

In another aspect the invention provides a method of calibrating a spectroscopic system comprising the sters disclosed in claim 8.

According to the invention, calibrating of the spectroscopic system comprises maximizing of radiation being transmitted through the reference segment. The reference segment and in particular the first position specifying the lateral position of the reference segment on the spatial light manipulation means corresponds to the position of the spectral line of the excitation radiation. Hence, the wavelength of the excitation radiation serves as a reference for the calibration of the optical analysis system. Since the return radiation and hence the optical signal that is subject to spectroscopic analysis intrinsically has a spectral component that corresponds to the wavelength of the excitation radiation, no additional light source for calibrating the spectroscopic system is required. In this way erroneous calibration that is due to insufficient positioning or insufficient alignment of the calibrating light source is not present.

According to a further preferred embodiment of the invention, calibrating of the spectroscopic system either comprises translating the spatial light manipulation means along the first direction and/or modifying the wavelength of the excitation radiation by means of the controlling the light source, and/or rotating and/or translating the dispersive optical element and/or reconfiguring a spatial transmission pattern of the spatial light manipulation means.

Further it is to be noted, that any reference signs in the claims are not to be construed as limiting the scope of the present invention.

In the following preferred embodiments of the invention will be described in detail by making reference to the drawings in which:

| | |
|---|---|
| Figure 1 | is a schematic diagram of an embodiment of a blood analysis system, |
| Figures 2a and 2b | are spectra of the optical signal generated from blood in the skin and from a sample comprising one analyte in a solution, |
| Figure 3 | is a spectral weighting function implemented in a multivariate optical element, |
| Figure 4 | schematically illustrates a block diagram of the optical analysis system, |
| Figure 5 | schematically illustrates a block diagram of possible detector configurations, |
| Figure 6 | shows a perspective illustration of the spatial light modulating mask and a corresponding detector, |
| Figure 7 | shows a flowchart of calibrating the optical analysis system. |

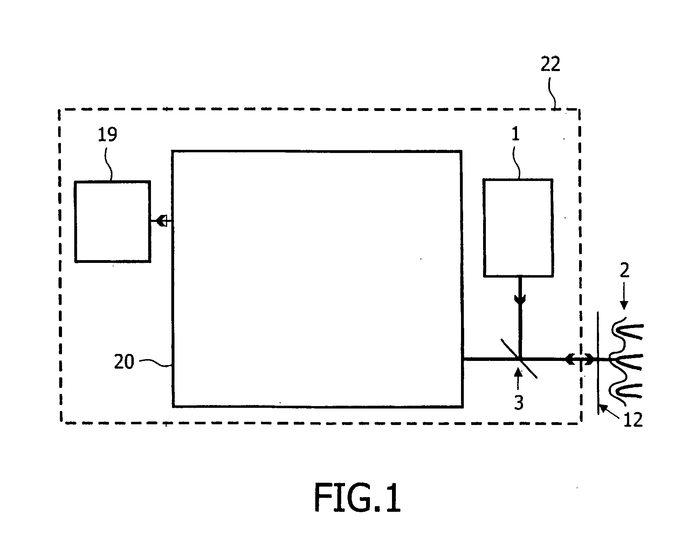

In the embodiment shown in figure 1 the spectroscopic system is schematically illustrated. The spectroscopic system has an optical analysis system 20 for determining an amplitude of a principal component of an optical signal. The spectroscopic system further has a light source 1 for providing light for illuminating a sample 2 comprising a substance having a concentration and thereby generating the principal component. The amplitude of the principal component relates to the concentration of the substance. The light source 1 is a laser such as a gas laser, a dye laser and/or a solid state laser such as a semiconductor or diode laser.

The optical analysis system 20 is part of a blood analysis system 22. The blood analysis system further comprises a computational element 19 for determining the amplitude of the principal component, hence for determining the composition of the compound. The sample 2 comprises skin with blood vessels. The substance may be one or more of the following analytes: glucose, lactate, cholesterol, oxy-hemoglobin and/or desoxy-hemoglobin, glycohemoglobin (HbA1c), hematocrit, cholesterol (total, HDL, LDL), triglycerides, urea, albumin, creatinin, oxygenation, pH, bicarbonate and many others. The concentrations of these substances is to be determined in a non-invasive way using optical spectroscopy. To this end the light provided by the light source 1 is sent to a beam splitter 3 which reflects the light provided by the light source towards the blood vessels in the skin. The light may be focused on the blood vessel using an objective 12. The light may be focused in the blood vessel by using an imaging and analysis system as described in the international patent application WO 02/057759.

By interaction of the light provided by the light source 1 with the blood in the blood vessel an optical signal is generated due to Raman scattering and fluorescence. The optical signal thus generated may be collected by the objective 12 and sent to the dichroic mirror 3. The optical signal has a different wavelength than the light provided by the light source 1. The dichroic mirror is constructed such that it transmits at least a portion of the optical signal.

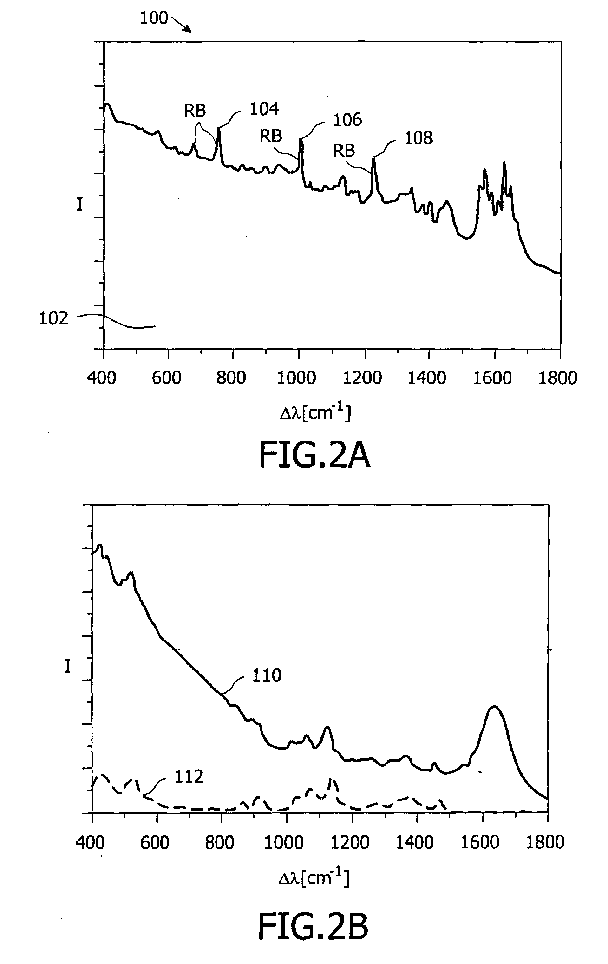

A spectrum 100 of the optical signal generated in this way is shown in figure 2A. The spectrum comprises a relatively broad fluorescence background (FBG) 102 and relatively narrow Raman bands (RB) 104, 106, 108. The x-axis of figure 2A denotes the wavelength shift with respect to the 785 nm of the excitation by light source 1 in wave numbers, the y-axis of figure 2A denotes the intensity in arbitrary units. The x-axis corresponds to zero intensity. The wavelength and the intensity of the Raman bands, i.e. the position and the height, is indicative for the type of analyte as is shown in the example of figure 2B for the analyte glucose which was dissolved in a concentration of 80 mMol in water. The solid line 110 of figure 2B shows the spectrum of both glucose and water, the dashed line 112 of figure 2B shows the difference between the spectrum of glucose in water and the spectrum of water without glucose. The amplitude of the spectrum with these bands is indicative for the concentration of the analyte.

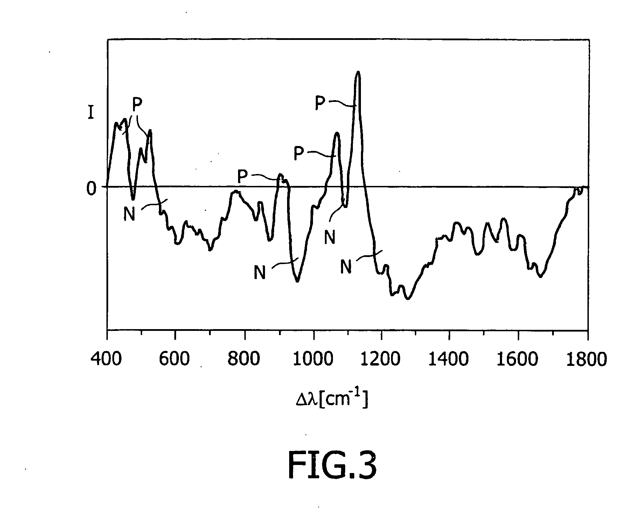

Because blood comprises many compounds each having a certain spectrum which may be as complex as that of figure 2B, the analysis of the spectrum of the optical signal is relatively complicated. The optical signal is sent to the spectroscopic system 20 according to the invention where the optical signal is analyzed by a MOE which weighs the optical signal by a weighting function shown e.g. schematically in figure 3. The weighting function of figure 3 is designed for glucose in blood. It comprises a positive part P and a negative part N. The positive part P and the negative part N each comprise in this example more than one spectral band.

Here and in the remainder of this application the distance between a focusing member and another optical element is defined as the distance along the optical axis between the main plane of the focusing member and the main plane of the other optical element.

A computational element 19 shown in figure 1 is arranged to calculate the difference between the positive and negative signal. This difference is proportional to the amplitude of the principal component of the optical signal. The amplitude of the principal component relates to the concentration of the substance, i.e. of the analyte. The relation between the amplitude and the concentration may be a linear dependence.

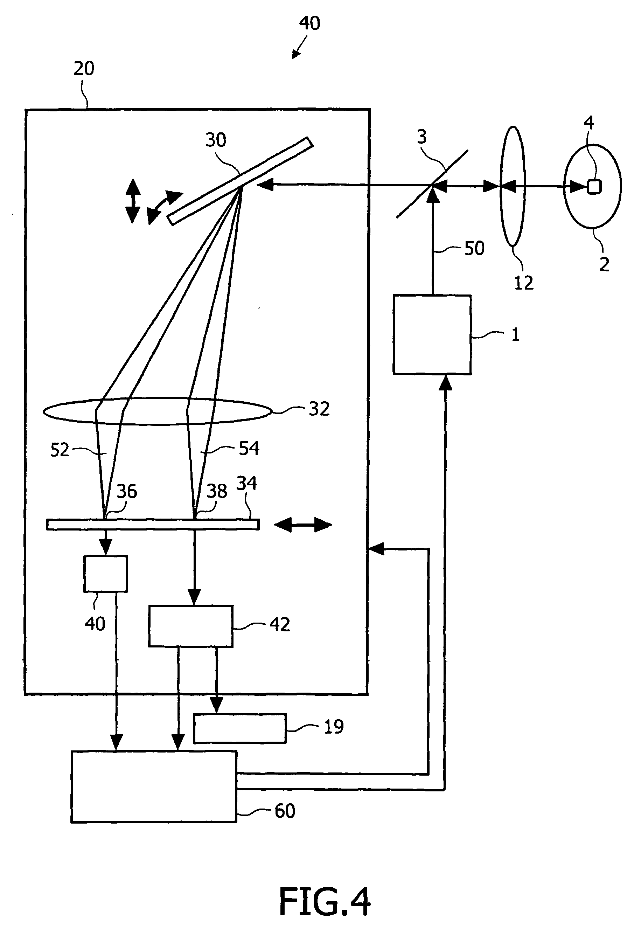

Figure 4 schematically illustrates a block diagram of the blood analysis system 22 and the optical analysis system 20 in a more detailed way. Here, the optical analysis system 20 is shown as an integral part of the blood analysis system 22. However, the invention is by no means restricted to blood analysis but may be universally applied to various spectroscopic operational areas. In the illustrated embodiment, the optical analysis system 20 has a dispersive optical element 30, a lens 32, a spatial light transmission mask 34 and two detectors 40, 42. The output of the two detectors 40, 42 is coupled into a control unit 60 that is in turn adapted to manipulate the path of the optical beams inside the optical analysis system 20 as well as to calibrate or to tune the light source 1.

The light source 1 is preferably implemented as a laser light source operating in the near infrared spectral range. The light source produces an optical beam of excitation radiation 50 that is directed towards the beam splitter 3. The arrangement of beam splitter 3 and objective lens 12 serves to focus the excitation radiation 50 into the volume of interest 4 of the biological sample 2. Inside the volume of interest the excitation radiation typically induces a variety of scattering processes. In particular inelastic scattering processes, like Stokes or Anti-Stokes scattering processes lead to a Raman spectrum that allows for spectral analysis for determination of the composition of the volume of interest 4. Typically, a part of the Raman spectrum is back-scattered and re-enters the objective lens 12 in a counter propagating way with respect to the excitation radiation 50. The collected return radiation is then transmitted through the beam splitter 3 and becomes incident on the dispersive optical element 30.

The dispersive optical element 30 can be implemented by e.g. a transmission or reflection grating, a prism or any other dispersive element that provides spatial separation of spectral components of an incident light beam. The dispersive element 30 provides spatial separation of the spectral components of the incident return radiation in the horizontal direction, as shown in figure 4. The lens 32 provides focusing of the various spectral components 52, 54 of the return radiation to different positions on the spatial light transmission mask 34. Depending on the light transmission pattern of the spatial light transmission mask 34, the various spectral components of the return radiation are selective attenuated or even blocked. In this way a spectral weighting function as required for multivariate optical analysis can be effectively realized.

For an accurate and reliable determination of a concentration of a particular compound of the volume of interest 4, the relative position between the evolving spectrum and the spatial light transmission mask 34 is of high relevance. Already a slight mismatch between the position of the spectrum and the horizontal alignment of the transmission mask 34 may lead to an insufficient result of the optical and spectral analysis of the return radiation.

The transmission mask 34 comprises a slit 36 at a first position that serves as a reference segment. When properly aligned the position of the reference segment 36 corresponds to the position of the spectral component 52 of the return radiation. This spectral component 52 serves as a reference line in the spectrum. Preferably, the reference line is determined by the wavelength of the excitation radiation 50. Typically, the spectrum not only comprises spectral components from inelastic but also from elastic scattering processes that leave the wavelength of the optical radiation substantially unaffected during a scattering process. Moreover, elastically scattered radiation may even represent a major portion of the return radiation. The slit 36 is therefore highly transmissive for the wavelength of the excitation radiation. Hence, radiation that is transmitted through the slit 36 is detected by means of the detector 40 that is adapted to generate a calibration signal that is fed into the control unit 60.

Slit 38 of the transmission mask 34 is located at a different horizontal position compared to slit 36. It therefore serves to attenuate and/or to transmit a spectral component of the return radiation featuring a different wavelength than the excitation radiation 50. Typically, the transmission mask 34 comprises a plurality of slits 38 that are located at different horizontal locations on the transmission mask 34. The slits 36, 38 might be implemented as slit apertures. Additionally, they might be combined with neutral density filters for selectively attenuating different spectral components of the return radiation to various degrees.

The transmission mask 34 can be implemented as a fixed transmission mask providing a single spatial transmission pattern. In such a case the optical analysis is dedicated for determining the concentration of a single particular compound in the volume of interest 4. Various compounds or analytes in the volume of interest 4 might be investigated and spectrally analyzed by replacing the transmission mask 34 by another compound specific transmission mask that is dedicated for multivariate optical analysis of a different compound.

Alternatively, the transmission mask 34 might be implemented as a reconfigurable transmission mask. This can for example be realized by implementing the transmission mask 34 on the basis of a liquid crystal cell in combination with a crossed polarizer arrangement.

Detector 42 serves to detect radiation that has been transmitted through the transmission mask 34. Preferably, some kind of focusing means is placed between transmission mask 34 and detector 42 in order to collect a plurality of transmitted spectral components onto the detector 42. Hence, detector 42 generates an output signal in response to detect a plurality of transmitted spectral components. The output signal of detector 42 is therefore directly indicative of the concentration of a particular compound that can be calculated by means of the computational element 19.

The calibration signal generated by means of detector 40 is provided to the control unit 60 that in turn is adapted to manipulate the horizontal position of the transmission mask 34, to shift or to rotate the dispersive optical element 30 or to tune the light source 1. Whenever the light intensity detected by detector 40 does not correspond to an intensity that is expected for an accurate calibration of the optical analysis system, the control unit may successively modify the position or orientation of the optical components 30, 34 or may tune the light source 1 until the intensity detected by detector 40 corresponds to an expected value. Additionally, the control unit 60 may perform a position scan of transmission mask 34 in order to maximize the light intensity detected by detector 40.

In this way the intrinsically present excitation radiation component of the collected return radiation can be effectively exploited for calibration of the optical analysis system 20.

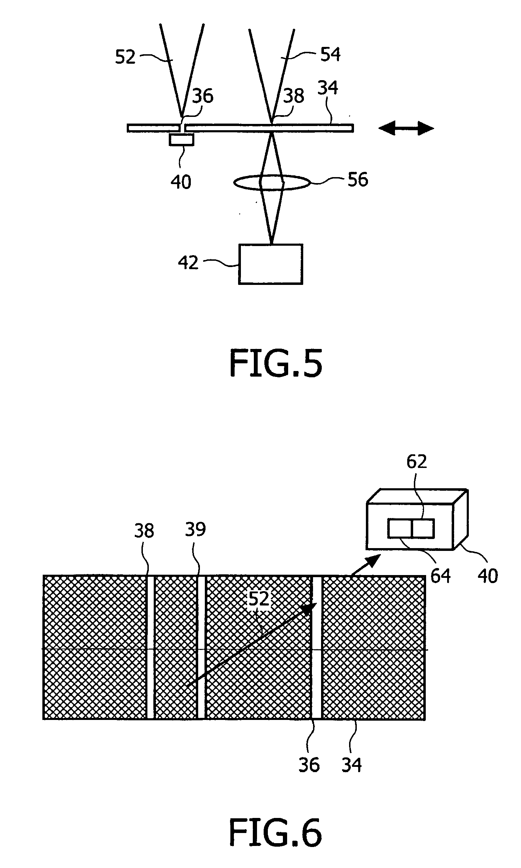

Figure 5 shows an alternative arrangement of the two detectors 40, 42 with respect to the spatial light transmission mask 34. Here, detector 40 that is adapted for detection of the calibration signal 52 is positioned directly behind the slit 36 of the transmission mask 34. In this way no additional optical means, like lenses are required for directing the transmitted radiation onto the detector 40. Additionally, by mechanically fixing or mechanically coupling detector 40 to the transmission mask 34, the detector 40 follows any movement of the transmission mask 34.

Moreover, figure 5 also depicts a collection lens 56 that serves to focus transmitted spectral components of the return radiation 54 onto the detector 42 for multivariate optical analysis.

Figure 6 shows a perspective illustration of the transmission mask 34 and the detector 40. The transmission mask 34 features three slit apertures 36, 38, 39 that serve to transmit a corresponding spectral component of the return radiation. In particular, slit aperture 36 serves as reference segment of the transmission mask 34 and is therefore horizontally positioned in such a way that it provides transmission of an excitation radiation spectral component of the return radiation 52.

Detector 40 is implemented as a split detector that has at least two detection segments 62, 64. In this way the detector 40 not only allows to determine whether the optical analysis system is not properly calibrated but also provides information of a type of positional mismatch between the spatial distribution of the spectrum and the transmission mask 34. For example, when the two detection segments 62, 64 of the detector 40 detect equal transmitted intensity, this gives a clear indication that the optical analysis system is accurately calibrated. Whenever one of the two detection segments 62, 64 detects a larger intensity than the other one, information whether the transmission mask 34 has to be shifted to the left or to the right is directly obtained. In this way a calibration of the optical analysis system can be performed in a less time intensive way, i.e. a scan for a maximum of transmitted intensity has in principle only to be performed along one direction.

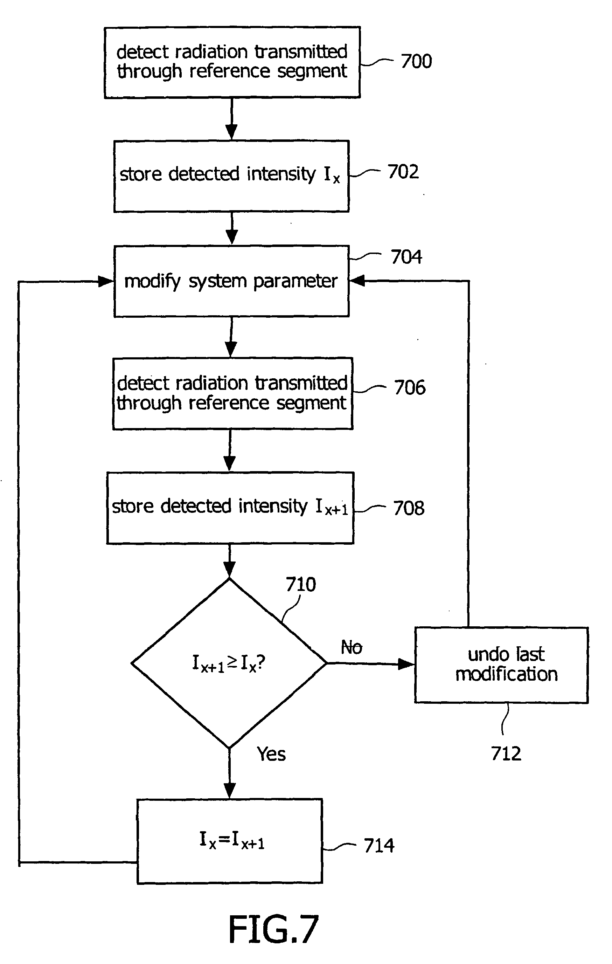

Figure 7 illustrates a flowchart for performing the inventive calibration method making use of e.g. a photodiode as detector 40. In a first step 700 radiation that is transmitted through the reference segment 36 is detected. This detected light intensity is stored in a subsequent step 702 as intensity $I_x$. When no reference intensity is stored in the control unit that allows to determine whether the measured intensity $I_x$ corresponds to the maximum intensity, thereby indicating that the optical analysis system is accurately calibrated, in a subsequent step 704 a system parameter of the optical analysis system is modified. Modification of a system parameter typically refers to translating of the spatial transmission mask 34, translating or rotating of the dispersive optical element 30, tuning or calibrating of the laser light source 1 and reconfiguring of the spatial light transmission pattern of the transmission mask 34.

Modification of these system parameters either corresponds to a successive modification of a single system parameter or to simultaneous or combined modification of a variety of system parameters. After or during modification of those system parameters performed in step 704 radiation that is transmitted through the reference segment is repeatedly detected in step 706. A corresponding intensity referred to as $I_{x+1}$ is stored in step 708. Thereafter, the detected light intensities $I_x$ and $I_{x+1}$ are compared in step 710. Comparison of the two light intensities that correspond to slightly different calibration configurations of the optical analysis system typically refers to a comparison of their absolute value.

In case that the successively detected intensity of $I_{x+1}$ is larger than the previously detected intensity $I_x$ the

**EP 1 784 625 B1**

method continues with step 714 where intensity $I_x$ is replaced by the recently detected intensity $I_{x+1}$. In this way the intensity $I_x$ principally refers to a temporary maximum detected intensity. After step 714 the method returns to step 704 where again a system parameter of the optical analysis system is modified.

In the other case, where the recently detected intensity $I_{x+1}$ is not larger than the previously detected intensity $I_x$, after step 710 the method continues with step 712, where the last modification performed in step 704 is undone. In this case the modification of a system parameter performed in 704 did not lead to an improvement of the optical analysis system's calibration. Therefore, the performed modification is cancelled. After this canceling performed in step 712 the method returns to step 704, where another system parameter is preferably subject to modification.

In this way the optical analysis system is iteratively and constantly calibrated by means of seeking for a maximum of transmitted intensity of the reference spectral component.

Consequently, the invention provides an autonomous calibration of a multivariate based spectrometer. By making use of the excitation radiation as calibration or reference line in the obtained spectrum, no additional light source for calibration of the optical analysis system is needed.

LIST OF REFERENCE NUMERALS

| 1 | light source |
| 2 | sample |
| 3 | beam splitter |
| 4 | volume of interest |
| 12 | objective |
| 19 | computational element |
| 20 | optical analysis system |
| 22 | blood analysis system |
| 30 | dispersive element |
| 32 | lens |
| 34 | spatial light transmission mask |
| 36 | slit |
| 38 | slit |
| 40 | detector |
| 42 | detector |
| 50 | excitation radiation |
| 52 | return radiation |
| 54 | return radiation |
| 56 | lens |
| 60 | control unit |
| 62 | detection segment |
| 64 | detection segment |

**Claims**

1. A spectroscopic system of a blood analysis system for determining a principal component of an optical signal, the optical signal comprising return radiation from a volume of interest (4) relating to a blood vessel, the spectroscopic system comprising:

   - a light source (1) for generating an excitation radiation,
   - means for transmitting the excitation radiation (50) into the volume of interest,
   - an objective (12) for collecting return radiation from the volume of interest,
   - a dispersive optical element (30) for spatially separating spectral components of the return radiation in a first direction,
   - spatial light manipulation means (34) for modulating the spectral components of the return radiation, the spatial light manipulation means further having a reference segment (36), the reference segment being located at a first position on the light manipulation means, said first position substantially corresponding to the wavelength of the excitation radiation, and the reference segment being at least partially transparent for the radiation having substantially the same wavelength as the excitation radiation transmitted in the volume of interest, wherein the

9

spatial light manipulation means for modulating the spectral components of the return radiation being at wavelengths different from the wavelength of the excitation radiation are located on other positions than the first position along the first direction,

- at least a first detector (40) for detecting radiation being transmitted through the reference segment,
- a second detector (42) that is adapted to detect return radiation transmitted through the spatial light manipulation means for modulating the spectral components of the return radiation being at wavelengths different from the wavelength of the excitation radiation,
- a control unit (60) being adapted to calibrate the optical analysis system on the basis of the radiation being detected by means of the at least first detector, wherein the control unit (60) is adapted to translate the spatial light manipulation means (34) along the first direction in order to maximize the light intensity detected by the first detector (40).

2. The spectroscopic system according to claim 1, wherein the reference segment (36) comprises a slit aperture.

3. The spectroscopic system according to claim 1, wherein the control unit (60) is adapted to control the light source (1) in order to modify the wavelength of the excitation radiation (50).

4. The spectroscopic system according to claim 1, wherein the control unit (60) is adapted to rotate or to translate the dispersive optical element (30).

5. The spectroscopic system according to claim 1, wherein the spatial light manipulation means (34) are modifiable, the control unit (60) being further adapted to modify the spatial light manipulation means.

6. The spectroscopic system according to claim 1, wherein the at least first detector (40) comprises a segmented detector having at least two detector segments (62, 64) being separated along the first direction.

7. The spectroscopic system according to claim 1, wherein the at least first detector (40) being integrated into the spatial light manipulation means (34) at the first position.

8. A method of calibrating a spectroscopic system of a blood analysis system having a light source (1) for generating an excitation radiation (50), means for transmitting the excitation radiation into a volume of interest (4) relating to a blood vessel, an objective (12) for collecting return radiation from the volume of interest, a dispersive optical element (30) for spatially separating spectral components of the return radiation in a first direction and spatial light manipulation means (34) for modulating the spectral components of the return radiation, the method of calibrating comprising the steps of:

   - detecting radiation being transmitted through a reference segment (36) of the spatial light manipulation means by means of an at least first detector (40) and detecting return radiation transmitted through the spatial light manipulation means for modulating the spectral components of the return radiation being at wavelengths different from the wavelength of the excitation radiation by means of a second detector (42), wherein the reference segment is at least partially transparent for the radiation having substantially the same wavelength as the excitation radiation transmitted in the volume of interest, wherein the reference segment is located at a first position on the spatial light manipulation means, said first position substantially corresponding to the wavelength of the excitation radiation, wherein the spatial light manipulation means for modulating the spectral components of the return radiation being at wavelengths different from the wavelength of the excitation radiation are located on other positions than the first position along the first direction,
   - calibrating the spectroscopic system on the basis of radiation being detected by means of the at least first light detector
   - translating the spatial light manipulation means along the first direction in order to maximize the light intensity detected by the first detector (40) .

9. The method according to claim 8, wherein calibrating of the spectroscopic system comprising maximizing the radiation being transmitted through the reference segment.

10. The method according to claim 8, wherein calibrating of the spectroscopic system further comprising the steps of:

   - modifying the wavelength of the excitation radiation by means of controlling the light source, and/or
   - rotating and/or translating the dispersive optical element, and/or

- reconfiguring a spatial transmission pattern of the spatial light manipulation means.

**Patentansprüche**

1. Spektroskopisches System eines Blutanalysesystems zum Bestimmen einer Hauptkomponente eines optischen Signals, wobei das optische Signal Rückstrahlung von einem zu einem Blutgefäß gehörenden interessierenden Volumen (4) umfasst, wobei das spektroskopische System Folgendes umfasst:

   - eine Lichtquelle (1) zum Erzeugen einer Anregungsstrahlung,
   - Mittel zum Aussenden der Anregungsstrahlung (50) in das interessierende Volumen,
   - ein Objektiv (12) zum Sammeln der Rückstrahlung vom interessierenden Volumen,
   - ein dispersives optisches Element (30) zum räumlichen Trennen von Spektralanteilen der Rückstrahlung in einer ersten Richtung,
   - Mittel zur räumlichen Lichtmanipulation (34) für das Modulieren der Spektralanteile der Rückstrahlung, wobei die Mittel zur räumlichen Lichtmanipulation weiterhin ein Referenzsegment (36) haben, wobei das Referenzsegment an einer ersten Position auf den Lichtmanipulationsmitteln angeordnet ist, wobei die genannte erste Position im Wesentlichen der Wellenlänge der Anregungsstrahlung entspricht, und wobei das Referenzsegment zumindest teilweise transparent für die Strahlung ist, die im Wesentlichen die gleiche Wellenlänge hat wie die in das interessierende Volumen gesendete Anregungsstrahlung, wobei die Mittel zur räumlichen Lichtmanipulation für das Modulieren der Spektralanteile der Rückstrahlung mit anderen Wellenlängen als der Wellenlänge der Anregungsstrahlung an anderen Positionen als der ersten Position entlang der ersten Richtung angeordnet sind,
   - mindestens einen ersten Detektor (40) zum Detektieren der durch das Referenzsegment übertragenen Strahlung,
   - einen zweiten Detektor (42), der vorgesehen ist, um durch die Mittel zur räumlichen Lichtmanipulation für das Modulieren der Spektralanteile der Rückstrahlung übertragene Rückstrahlung zu detektieren, die eine andere Wellenlänge als die Wellenlänge der Anregungsstrahlung hat,
   - eine Steuerungseinheit (60), die vorgesehen ist, um das optische Analysesystem ausgehend von der Strahlung zu kalibrieren, die durch den mindestens ersten Detektor detektiert wird, wobei die Steuerungseinheit (60) vorgesehen ist, um die Mittel zur räumlichen Lichtmanipulation (34) entlang der ersten Richtung zu verschieben, um die durch den ersten Detektor (40) detektierte Lichtintensität zu maximieren.

2. Spektroskopisches System nach Anspruch 1, wobei das Referenzsegment (36) eine Schlitzapertur umfasst, wobei die genannte erste Position im Wesentlichen der Wellenlänge der Anregungsstrahlung entspricht.

3. Spektroskopisches System nach Anspruch 1, wobei die Steuerungseinheit (60) vorgesehen ist, um die Lichtquelle (1) so zu steuern, dass die Wellenlänge der Anregungsstrahlung (50) modifiziert wird.

4. Spektroskopisches System nach Anspruch 1, wobei die Steuerungseinheit (60) vorgesehen ist, um das dispersive optische Element (30) zu drehen oder zu verschieben.

5. Spektroskopisches System nach Anspruch 1, wobei die Mittel zur räumlichen Lichtmanipulation (34) modifizierbar sind, wobei die Steuerungseinheit (60) weiterhin vorgesehen ist, um die Mittel zur räumlichen Lichtmanipulation zu modifizieren.

6. Spektroskopisches System nach Anspruch 1, wobei der mindestens erste Detektor (40) einen segmentierten Detektor mit mindestens zwei Detektorsegmenten (62, 64) umfasst, die entlang der ersten Richtung getrennt sind.

7. Spektroskopisches System nach Anspruch 1, wobei der mindestens erste Detektor (40) an der ersten Position in die Mittel zur räumlichen Lichtmanipulation (34) integriert ist.

8. Verfahren zum Kalibrieren eines spektroskopischen Systems eines Blutanalysesystems mit einer Lichtquelle (1) zum Erzeugen einer Anregungsstrahlung (50), Mitteln zum Aussenden der Anregungsstrahlung in das zu einem Blutgefäß gehörende interessierende Volumen (4), einem Objektiv (12) zum Sammeln der Rückstrahlung vom interessierenden Volumen, einem dispersiven optischen Element (30) zum räumlichen Trennen von Spektralanteilen der Rückstrahlung in einer ersten Richtung, und Mitteln zur räumlichen Lichtmanipulation (34) für das Modulieren der Spektralanteile der Rückstrahlung, wobei das Kalibrierverfahren die folgenden Schritte umfasst:

- Detektieren der durch ein Referenzsegment (36) der Mittel zur räumlichen Lichtmanipulation übertragenen Strahlung mit Hilfe von mindestens einem ersten Detektor (40) und Detektieren der durch die Mittel zur räumlichen Lichtmanipulation für das Modulieren der Spektralanteile der Rückstrahlung übertragenen Rückstrahlung, die eine andere Wellenlänge hat als die Wellenlänge der Anregungsstrahlung, mit Hilfe eines zweiten Detektors (42), wobei das Referenzsegment zumindest teilweise transparent für die Strahlung ist, die im Wesentlichen die gleiche Wellenlänge hat wie die in das interessierende Volumen gesendete Anregungsstrahlung, wobei das Referenzsegment an einer ersten Position auf den Mitteln zur räumlichen Lichtmanipulation angeordnet ist, wobei die genannte erste Position im Wesentlichen der Wellenlänge der Anregungsstrahlung entspricht, wobei die Mittel zur räumlichen Lichtmanipulation für das Modulieren der Spektralanteile der Rückstrahlung mit anderen Wellenlängen als der Wellenlänge der Anregungsstrahlung an anderen Positionen als der ersten Position entlang der ersten Richtung angeordnet sind,
- Kalibrieren des spektroskopischen Systems ausgehend von der Strahlung, die durch den mindestens ersten Lichtdetektor detektiert wird,
- Verschieben der Mittel zur räumlichen Lichtmanipulation entlang der ersten Richtung, um die durch den ersten Detektor (40) detektierte Lichtintensität zu maximieren.

9. Verfahren nach Anspruch 8, wobei das Kalibrieren des spektroskopischen Systems das Maximieren der durch das Referenzsegment übertragenen Strahlung umfasst.

10. Verfahren nach Anspruch 8, wobei das Kalibrieren des spektroskopischen Systems weiterhin die folgenden Schritte umfasst:

- Modifizieren der Wellenlänge der Anregungsstrahlung durch Steuern der Lichtquelle, und/oder
- Drehen und/oder Verschieben des dispersiven optischen Elements, und/oder
- Rekonfigurieren eines räumlichen Übertragungsmusters der Mittel zur räumlichen Lichtmanipulation.

**Revendications**

1. Système spectroscopique d'un système d'analyse du sang pour déterminer un composant principal d'un signal optique, le signal optique comprenant un rayonnement de retour à partir d'un volume d'intérêt (4) connexe à un vaisseau sanguin, le système spectroscopique comprenant :

- une source lumineuse (1) pour générer un rayonnement d'excitation,
- des moyens pour transmettre le rayonnement d'excitation (50) dans le volume d'intérêt,
- un objectif (12) pour collecter un rayonnement de retour à partir du volume d'intérêt,
- un élément optique dispersif (30) pour séparer spatialement des composants spectraux du rayonnement de retour dans une première direction,
- des moyens de manipulation de lumière spatiale (34) pour moduler les composants spectraux du rayonnement de retour, les moyens de manipulation de lumière spatiale possédant en outre un segment de référence (36), le segment de référence étant situé dans une première position sur les moyens de manipulation de lumière, ladite première position correspondant sensiblement à la longueur d'onde du rayonnement d'excitation et le segment de référence étant au moins partiellement transparent pour le rayonnement possédant sensiblement la même longueur d'onde que le rayonnement d'excitation transmis dans le volume d'intérêt, dans lequel les moyens de manipulation de lumière spatiale pour moduler les composants spectraux du rayonnement de retour à des longueurs d'onde différentes de la longueur d'onde du rayonnement d'excitation sont situés dans des positions autres que la première position le long de la première direction,
- au moins un premier détecteur (40) pour détecter un rayonnement transmis à travers le segment de référence,
- un second détecteur (42) qui est adapté pour détecter un rayonnement de retour transmis à travers les moyens de manipulation de lumière spatiale pour moduler les composants spectraux du rayonnement de retour à des longueurs d'onde différentes de la longueur d'onde du rayonnement d'excitation,
- une unité de commande (60) adaptée pour étalonner le système d'analyse optique sur la base du rayonnement détecté au moyen de l'au moins premier détecteur, dans lequel l'unité de commande (60) est adaptée pour translater les moyens de manipulation de lumière spatiale (34) le long de la première direction afin de maximiser l'intensité lumineuse détectée par le premier détecteur (40).

2. Système spectroscopique selon la revendication 1, dans lequel le segment de référence (36) comprend une ouverture rainurée.

**3.** Système spectroscopique selon la revendication 1, dans lequel l'unité de commande (60) est adaptée pour commander la source lumineuse (1) afin de modifier la longueur d'onde du rayonnement d'excitation (50).

**4.** Système spectroscopique selon la revendication 1, dans lequel l'unité de commande (60) est adaptée pour faire tourner ou pour translater l'élément optique dispersif (30).

**5.** Système spectroscopique selon la revendication 1, dans lequel les moyens de manipulation de lumière spatiale (34) sont modifiables, l'unité de commande (60) étant en outre adaptée pour modifier les moyens de manipulation de lumière spatiale.

**6.** Système spectroscopique selon la revendication 1, dans lequel l'au moins premier détecteur (40) comprend un détecteur segmenté possédant au moins deux segments détecteurs (62, 64) séparés le long de la première direction.

**7.** Système spectroscopique selon la revendication 1, dans lequel l'au moins premier détecteur (40) est intégré dans les moyens de manipulation de lumière spatiale (34) dans la première position.

**8.** Procédé d'étalonnage d'un système spectroscopique d'un système d'analyse du sang possédant une source lumineuse (1) pour générer un rayonnement d'excitation (50), des moyens pour transmettre le rayonnement d'excitation dans un volume d'intérêt (4) connexe à un vaisseau sanguin, un objectif (12) pour collecter un rayonnement de retour à partir du volume d'intérêt, un élément optique dispersif (30) pour séparer spatialement des composants spectraux du rayonnement de retour dans une première direction et des moyens de manipulation de lumière spatiale (34) pour moduler les composants spectraux du rayonnement de retour, le procédé d'étalonnage comprenant les étapes consistant à :

- détecter un rayonnement transmis à travers un segment de référence (36) des moyens de manipulation de lumière spatiale au moyen d'au moins un premier détecteur (40) et détecter un rayonnement de retour transmis à travers les moyens de manipulation de lumière spatiale pour moduler les composants spectraux du rayonnement de retour à des longueurs d'onde différentes de la longueur d'onde du rayonnement d'excitation au moyen d'un second détecteur (42), dans lequel le segment de référence est au moins partiellement transparent pour le rayonnement possédant sensiblement la même longueur d'onde que le rayonnement d'excitation transmis dans le volume d'intérêt, dans lequel le segment de référence est situé dans une première position sur les moyens de manipulation de lumière spatiale, ladite première position correspondant sensiblement à la longueur d'onde du rayonnement d'excitation, dans lequel les moyens de manipulation de lumière spatiale pour moduler les composants spectraux du rayonnement de retour à des longueurs d'onde différentes de la longueur d'onde du rayonnement d'excitation sont situés dans des positions autres que la première position le long de la première direction,
- étalonner le système spectroscopique sur la base d'un rayonnement détecté au moyen de l'au moins premier détecteur de lumière,
- translater les moyens de manipulation de lumière spatiale le long de la première direction afin de maximiser l'intensité lumineuse détectée par le premier détecteur (40).

**9.** Procédé selon la revendication 8, dans lequel l'étalonnage du système spectroscopique comprend l'étape consistant à maximiser le rayonnement transmis à travers le segment de référence.

**10.** Procédé selon la revendication 8, dans lequel l'étalonnage du système spectroscopique comprend en outre les étapes consistant à :

- modifier la longueur d'onde du rayonnement d'excitation en commandant la source lumineuse, et/ou
- faire tourner et/ou translater l'élément optique dispersif, et/ou
- reconfigurer une configuration de transmission spatiale des moyens de manipulation de lumière spatiale.

FIG.1

EP 1 784 625 B1

FIG.2A

FIG.2B

FIG.3

FIG.4

FIG.5

FIG.6

detect radiation transmitted
through reference segment — 700

store detected intensity $I_x$ — 702

modify system parameter — 704

detect radiation transmitted
through reference segment — 706

store detected intensity $I_{x+1}$ — 708

710

$I_{x+1} \geq I_x$?

No

undo last
modification

712

Yes

$I_x = I_{x+1}$ — 714

FIG.7

**EP 1 784 625 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61266925 A
- US 5504575 A
- US 4652761 A
- WO 03058183 A1
- WO 02057759 A